(19) **Europäisches Patentamt**

**European Patent Office**

**Office européen des brevets**

(11) **EP 0 545 654 B1**

(12) **EUROPEAN PATENT SPECIFICATION**

(45) Date of publication and mention
of the grant of the patent:
**04.07.2001 Bulletin 2001/27**

(51) Int Cl.⁷: **G06F 7/52**

(21) Application number: **92310911.0**

(22) Date of filing: **30.11.1992**

(54) **Digital multiplier circuit**

Digitale Multipliziererschaltung

Circuit de multiplication numérique

(84) Designated Contracting States:
**DE GB**

(30) Priority: **29.11.1991 JP 34216891**

(43) Date of publication of application:
**09.06.1993 Bulletin 1993/23**

(73) Proprietor: **SONY CORPORATION**
**Tokyo 141 (JP)**

(72) Inventor: **Yamazaki, Takao, c/o Sony Corporation**
**Tokyo (JP)**

(74) Representative: **Nicholls, Michael John**
**J.A. KEMP & CO.**
**14, South Square**
**Gray's Inn**
**London WC1R 5JJ (GB)**

(56) References cited:
**EP-A- 0 428 942**

- **PATENT ABSTRACTS OF JAPAN vol. 15, no. 111 (P-1180)18 March 1991**
- **IEEE JOURNAL OF SOLID-STATE CIRCUITS vol. SC-17, no. 5, October 1982, NEW YORK US pages 898 - 907 WARE ET AL '64 Bit Monolithic Floating Ponit Procesors'**

## Description

The present invention relates to a multiplying circuit, and in particular, to a multiplying circuit suitable for an integrated circuit.

A multiplying circuit which forms partial products, adds them, and obtains the multiplication result is known. This multiplying circuit is mostly occupied by a circuit portion which adds partial products. To reduce the circuit scale of the multiplying circuit, by using the Booth's algorithm, the number of partial products is decreased.

EP-A-0,428,942, on which the two part form of claim 1 is based, discloses a multiplying circuit for multiplying a multiplicand by a multiplier, comprising: partial product generating means for forming a plurality of partial products in accordance with a Booth's algorithm; and adding means for adding the partial products.

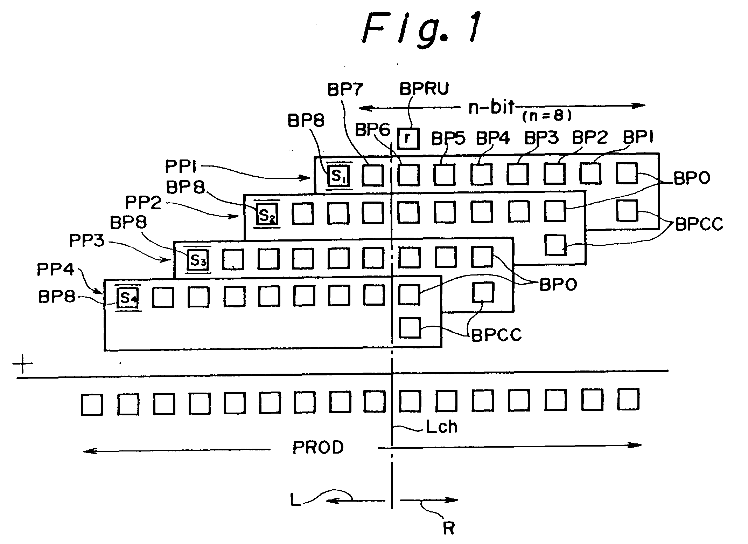

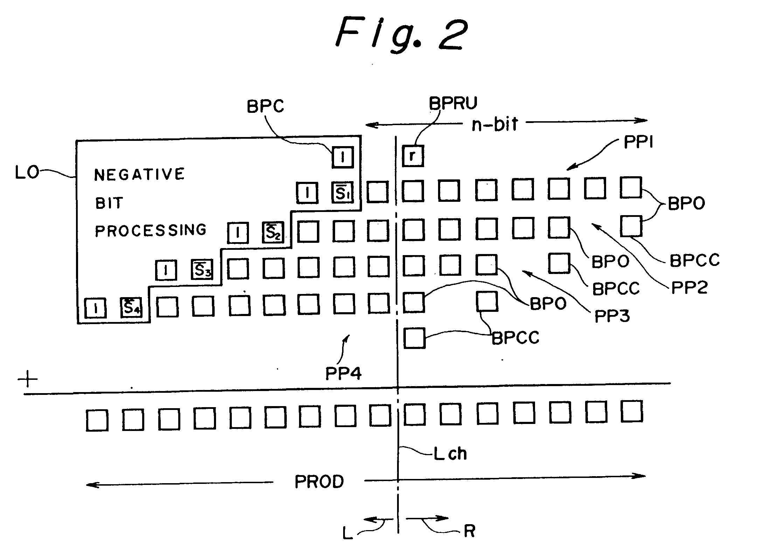

In the accompanying drawings Figs. 1 and 2 show the conception of the multiplication using additions of partial products. In this multiplication, a rounding process shown is Fig. 1 and a complement calculating process shown in Fig. 2 are preformed.

First, with reference to Fig. 1, the additions of partial products will be described. In Fig. 1, the conception of multiplication is accordance with the secondary Booth's algorithm is shown.

In Fig. 1, in each of partial products PP to PP4, bits BP0 to BP7 represent a multiplicand of eight bits. In addition, a bit BP8 represents a start bit Si (where i = 1 to 4, Si = $-2^{n-1}$) having a negative weight. The bit BP7 represents the digit of ($2^{n-1}$). The bit BPCC represents the position of bit "1" which is added when data is converted into the notation using the complement of 2. In other words, according to the secondary Booth's algorithm, a partial product can be a value which is multiplied by 0, ($\pm1$), or ($\pm2$). In this specification, as the notation representing the collection of these values, the partial products PP1 to PP4 shown in Fig. 1 are used.

In Fig. 1, in the partial product PP2, the position of the bit BP0 which is the LSB is moved by two bits in the MSB direction on the basis of the position of the bit BP0 of the partial product PP1. Likewise, in the partial products PP3 and PP4, the position of the bit BP0 which is the LSB is moved by two bits in the MSB direction.

By adding the above-mentioned partial products PP1 to PP4, a product PROD shown in Fig. 1 is formed. The product PROD is not output entirely, but partially due to a restriction of hardware. In the example, as shown in Fig. 1, digits on the L side of an alternate long and short dash line LCH are addition data which are output in accordance with an output word length. The remaining digits which are on the R side of the alternate long and short dash line LCH are addition data which are not output.

Next, with reference to Fig. 1, a rounding process will be described. The rounding process is used to output a part of calculation result due to various reasons.

In this example as shown in Fig. 1, a rounding bit BPRU is added to low order digits of the alternate long and short dash line LCH which defines the output word length so as to obtain a product PROD. In addition, the remaining data on the right (arrow R side) of the alternate long and short dash line LCH is discarded. Such a process which determines data according to the output word length is the rounding process.

Next, with reference to Fig. 2, a calculating process of the complement of 2 will be described. The complement calculating process is performed to eliminate the necessity of processing the MSBs (= $-2^{n-1}$) of the partial products PP1 to PP4 represented with a solid line LO shown in Fig. 2.

In Fig. 2, the start bit Si can be serially disposed as follows.

-[(0) (S4) (0) (S3) (0) (S2) (0) (S1)]

When the polarities of all the bits are inverted, the resultant bits are represented as follows. Hereunder, "*" represents the state where the polarity was inverted.

[(1) (S4*) (1) (S3*) (1) (S2*) (1) (S1*)]

By adding a complement processing bit BPC (= "1") to the LSB, the calculating process of the complement of 2 is performed. Thus, without necessity of processing MSBs (= $-2^{n-1}$) of the partial products PP1 to PP4, the product PROD as the multiplication result can be obtained by simply adding the partial products PP1 to PP4.

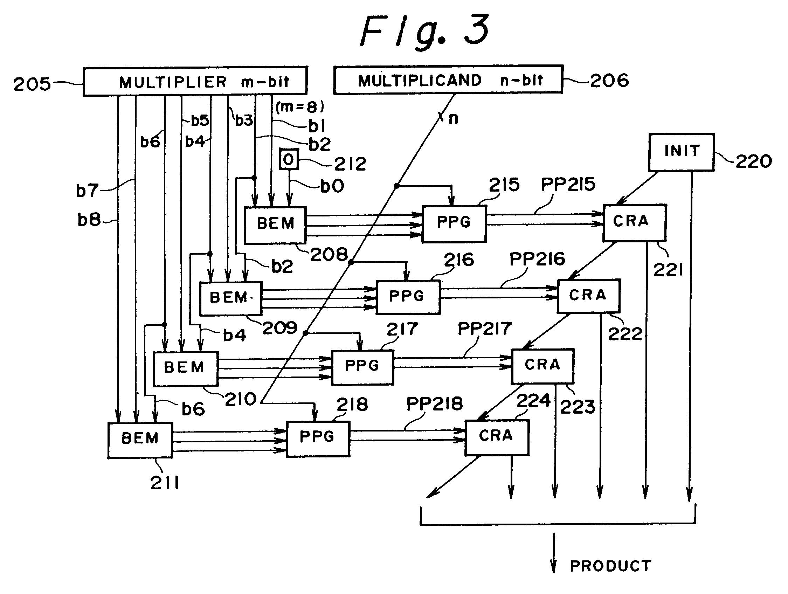

Fig. 3 shows an example of a multiplying circuit which performs a multiplication in accordance with the above-mentioned secondary Booth's algorithm. A multiplying circuit shown in Fig. 3 will now be described.

In the construction of Fig. 3, a multiplier of m bits (where m = 8 in this example) is stored in a register 205. In addition, a multiplicand of n bits is stored in a register 206.

In the register 205, the multiplier is divided into blocks of two bits. One high order bit of a low order block is added to one low order bit of a high order block. Thus, data of successive three bits is formed. This data of three bits is supplied to each of Booth's encoder modules (hereinafter referred to as the BEMs) 208 to 211. In a register 212, data (= "0") is stored. This data is supplied to the BEM 208.

Data of two bits, bl and b2, on the LSB side of the multiplier is supplied to the BEM 208. In addition, as a bit b0, the data (= "0") from the register 212 is supplied to the BEM 208. Further, the high order bit b2 of bits bl and b2 is supplied to the BEM 209 as the LSB thereof.

Likewise, data of two bits, b3 and b4, is supplied to the BEM 209. The bit b2 is supplied to the BEM 209 as the LSB thereof. The high order bit b4 of bits b3 and b4 is supplied to the BEM 210 as the LSB thereof.

Data of two bits, b5 and b6, is supplied to the BEM 210. The bit b4 is supplied to the BEM 210 as the LSB thereof. The high order bit b6 of the two bits b5 and b6 is supplied to the BEM 211 as the LSB thereof.

Data of two bits, b7 and b8, is supplied to the BEM 211. The bit b6 is supplied to the BEM 211 as the LSB thereof.

In the BEMs 208 to 211, signals which define the magnification and plus/minus sign of a partial product are formed in accordance with the data of three bits which is supplied in the above-mentioned manner. These signals are supplied from the BEMs 208 to 211 to partial product generating circuits (hereinafter referred to as the PPGs) 215 to 218, respectively.

On the other hand, the multiplicand of n bits which is received from the register 206 is supplied to the PPGs 215 to 218.

In the PPGs 215 to 218, respective partial products PP215 to PP218 where the complement calculating process (sign correcting process) has been performed are formed in accordance with the signals which define the multiplication and plus/minus sign of the partial products.

In each of the partial products PP215 to PP218, two bits of $[(1) (Si^*)]$, where the complement calculating process has been performed for the start bit $Si$, and the bit BPCC are added to the multiplicand of n bits. Thus, each of the partial products PP215 to PP218 is represented with $(n + 3)$ bits. These partial products PP215 to PP218 are supplied to carry ripple adders (hereinafter referred to as CRAs) 221 to 224, respectively.

An initial value, the above-mentioned BPC bit, and so forth are supplied from an initial value setting circuit 220 to the CRA 221. A part of the initial value is obtained through an output terminal.

In the CRA 221, an addition is performed in accordance with the partial product PP215 which is supplied from the PPG 215 and the initial value, the complement processing bit BPC, and so forth which are supplied from the initial value setting circuit 220. An addition output of the CRA 221 is obtained from an output terminal thereof. In addition, a carry output of the CRA 221 is supplied to the CRA 222, which follows the CRA 221.

In the CRA 222, the partial product PP216 which is supplied from the PPG 216 and the carry output which is supplied from the CRA 221 are added. An addition output of the CRA 222 is obtained from an output terminal thereof. In addition, a carry output of the CRA 222 is supplied to the CRA 223, which follows the CRA 222.

In the CRA 223, the partial product PP217 which is supplied from the PPG 217 and the carry output which is received from the CRA 222 are added. An addition output of the CRA 223 is obtained from an output terminal thereof. In addition, a carry output of the CRA 223 is supplied to the CRA 224, which follows the CRA 223.

In the CRA 224, the partial product PP218 which is supplied from the PPG 218 and the carry output which is received from the CRA 223 are added. An addition output of the CRA 224 is obtained from an output terminal thereof. In addition, a carry output of the CRA 224 is supplied to an output terminal thereof. Thus, the product PROD is obtained.

In the conventional multiplying circuit according to the Booth's algorithm, arrays which perform a rounding process, complement calculating process, and so forth necessary for adding the partial products PP1 to PP4 were irregularly and two-dimensionally disposed as shown in Fig. 2.

In the conventional multiplying circuit according to the Booth's algorithm, the above-mentioned irregularly and two-dimensionally disposed circuit construction was used as it was. In other words, in the layout stage, efforts for constructing the circuit as regularly as possible were made through experience and perception of the designer. However, since the circuit construction was irregular, in the LSI producing stage, the circuit could not be effectively designed by using basic circuits in the same construction.

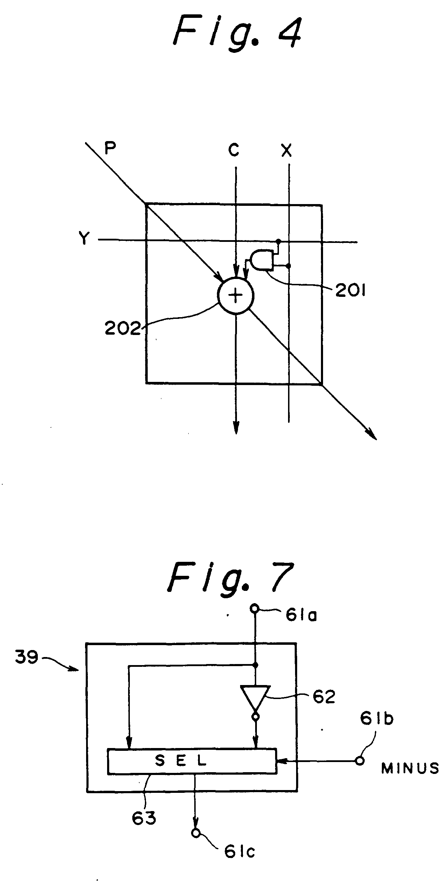

For example, as shown in Fig. 4, an example where a circuit is hierarchically constructed of multiplying cells as basic circuits, each of which consists of an AND gate 201 and a full adder 202, is known. However, this basic circuit construction was still in a small scale.

In addition, as another example, redundant circuits such as carry adders as shown in Fig. 3 were used as basic circuits. A multiplication was performed by using these basi circuits which were disposed in parallel. However, the carry adders which were used as basic circuits were redundant. Thus, this construction was not suitable from an optimum design point of view.

Although a combination type multiplying circuit can be designed in the above-mentioned manner, so far as time-division type multiplying circuit which performs a multiplication repeatedly using small circuits has not been effectively accomplished.

According to the present invention, there is provided a multiplying circuit as in claim 1.

Embodiments of the present invention provide multiplying circuits which can be effectively designed.

The present invention will be further described by way of example in the following detailed description thereof which is to be read in connection with the accompanying drawings, in which:-

Fig. 1 is a schematic diagram which describes an addition of partial products in accordance with the secondary Booth's algorithm;
Fig. 2 is a schematic diagram which describes a code correction which is performed for an addition of partial products in accordance with the secondary Booth's algorithm;
Fig. 3 is a block diagram which shows the construction of a conventional multiplying circuit;
Fig. 4 is a block diagram which shows the construction of a multiplying cell;
Fig. 5 is a block diagram which shows the first embodiment of a multiplying circuit according to the present invention;

Fig. 6 is a block diagram which shows the construction of a partial product generating circuit of the multiplying circuit;

Fig. 7 is a block diagram which shows the construction of an inverter for use in the partial product generating circuit;

Figs. 8A to 8C are schematic diagrams which describe an initial value setting circuit of the multiplying circuit;

Figs. 9A to 9F are schematic diagrams which describe the construction and operation of a redundant binary adder of the multiplying circuit;

Fig. 10 is a block diagram which shows a modification of the first embodiment according to the present invention;

Fig. 11 is a block diagram which describes the construction of the second embodiment of a multiplying circuit according to the present invention;

Fig. 12 is a timing chart which describes the operation of the second embodiment;

Fig. 13 is a block diagram which shows the third embodiment of a multiplying circuit according to the present invention; and

Fig. 14 is a timing chart which describes the operation of the third embodiment.

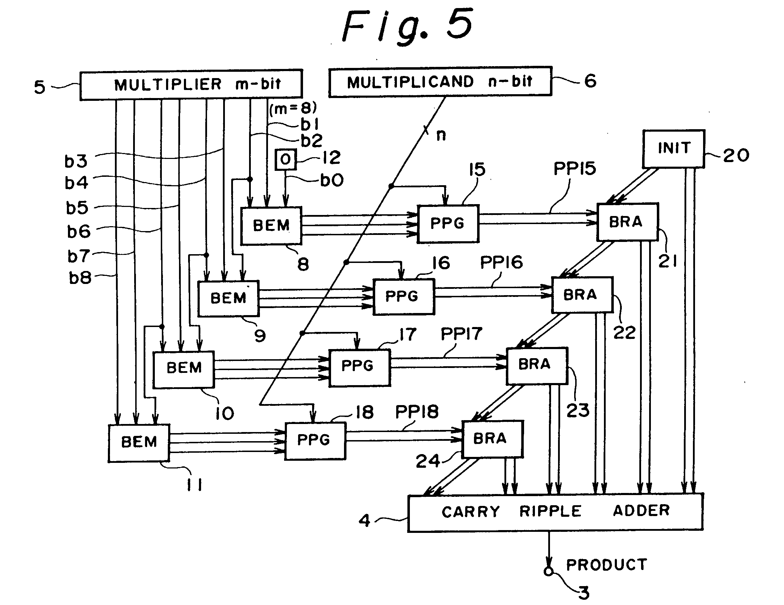

Embodiments of the present invention will now be described with reference to Figs. 5 to 14.

Figs. 5 to 9D show the first embodiment of the present invention. In the first embodiment, the present invention is applied to a combination type multiplying circuit which performs a multiplication in accordance with the secondary Booth's algorithm.

In the construction of Fig. 5, a multiplier of m bits (where m = 8 in this example) is stored in a register 5. In addition, a multiplicand of n bits is stored in a register 6.

In the register 5, the multiplier is divided into blocks of two bits. One high order bit of a low order block is added to one low order bit of a high order block. Thus, data of successive three bits is formed. This data of three bits is supplied to each of Booth's encoder modules (hereinafter referred to as the BEMs) 8 to 11. In a register 12, data (= "0") is stored. This data is supplied to the BEM 8.

Data of two bits, bl and b2, on the LSB side of the multiplier is supplied to the BEM 8. In addition, as a bit b0, the data (= "0") from the register 12 is supplied to the BEM 8. Further, the high order bit b2 of bits b1 and b2 is supplied to the BEM 9 as the LSB thereof.

Likewise, data of two bits, b3 and b4, is supplied to the BEM 9. The bit b2 is supplied to the BEM 9 as the LSB thereof. The high order bit b4 of bits b3 and b4 is supplied to the BEM 10 as the LSB thereof.

Data of two bits, b5 and b6, is supplied to the BEM 10. The bit b4 is supplied to the BEM 10 as the LSB thereof. The high order bit b6 of the two bits b5 and b6 is supplied to the BEM 11 as the LSB thereof.

Data of two bits, b7 and b8, is supplied to the BEM 11. The bit b6 is supplied to the BEM 11 as the LSB thereof.

In the BEMs 8 to 11, signals which define the magnification and plus/minus sign of a partial product are formed in accordance with the data of three bits supplied in the above-mentioned manner. These signals are supplied from the BEMs 8 to 11 to partial product generating circuits (hereinafter referred to as the PPGs) 15 to 18, respectively.

On the other hand, the multiplicand of n bits is supplied from the register 6 to the PPGs 15 to 18.

In the PPGs 15 to 18, respective partial products PP15 to PP18 where the complement calculating process (sign correcting process) has been performed are formed in accordance with the signals which define the multiplication and sign of the partial products.

In each of the partial products PP15 to PP18, two bits of $[(1) (Si^*)]$, where the complement calculating process has been performed for the start bit Si, and the bit BPCC are added to the multiplicand of n bits. Thus, each of the partial products PP15 to PP18 is represented with (n + 3) bits. These partial products PP15 to PP18 are supplied to Booth's redundancy adder (hereinafter referred to as the BRAs) 21 to 24, respectively.

Four bits on the LSB side of data including an initial value which are output from the initial value setting circuit 20 are supplied to a carry ripple adder (hereinafter referred to as the CRA) 4. On the other hand, the data including the initial value except for the above-mentioned four bits on the LSB side are supplied to the BRA 21.

The details of the PPGs 15 to 18, the BRAs 21 to 24, and the initial value setting circuit 20 will be described later. Each data is supplied from the initial value setting circuit 20 to the BRA 21 through two respective lines. Each data is supplied between the BRAs 21 to 24 through two respective lines. In addition, each data is supplied from the initial value setting circuit 20 and the BRAs 21 to 24 to the CRA 4 through two respective lines. In other words, each data is represented in redundant binary notation where two lines are used per bit.

In the BRA 21, the partial product PP15 which is supplied from the PPG 15 and the data containing the initial value which is received from the initial value setting circuit 20 are added. Four bits on the LSB side of the addition output of the BRA 21 are supplied to the CRA 4. The addition output except for the four bits on the LSB side are supplied to the BRA 22, which follows the BRA;

In the BRA 22, the partial product PP16 which is supplied from the PPG 16 and the addition output which is supplied from the BRA 21 are added. Four bits on the LSB side of the addition output of the BRA 22 are supplied to the CRA 4. The addition output except for the four bits on the LSB side are supplied to the BRA 23, which follows the BRA 22.

In the BRA 23, the partial product PP17 which is supplied from the PPG 17 and the addition output which is supplied from the BRA 22 are added. Four bits on the LSB side of the addition output of the BRA 23 are supplied to the CRA 4. The addition output except for the four bits on the LSB side are supplied to the BRA 24, which follows the BRA 23.

In the BRA 24, the partial product PP18 which is supplied from the PPG 18 and the addition output which is supplied from the BRA 23 are added. The addition output of the BRA 24 is supplied to the CRA 4.

In the CRA 4, a carry addition of the data which is supplied from the initial value setting circuit 20 and the BRAs 21 to 24 is performed. Thus, an addition output of the CRA 4 is formed. The addition output is obtained through a terminal 3.

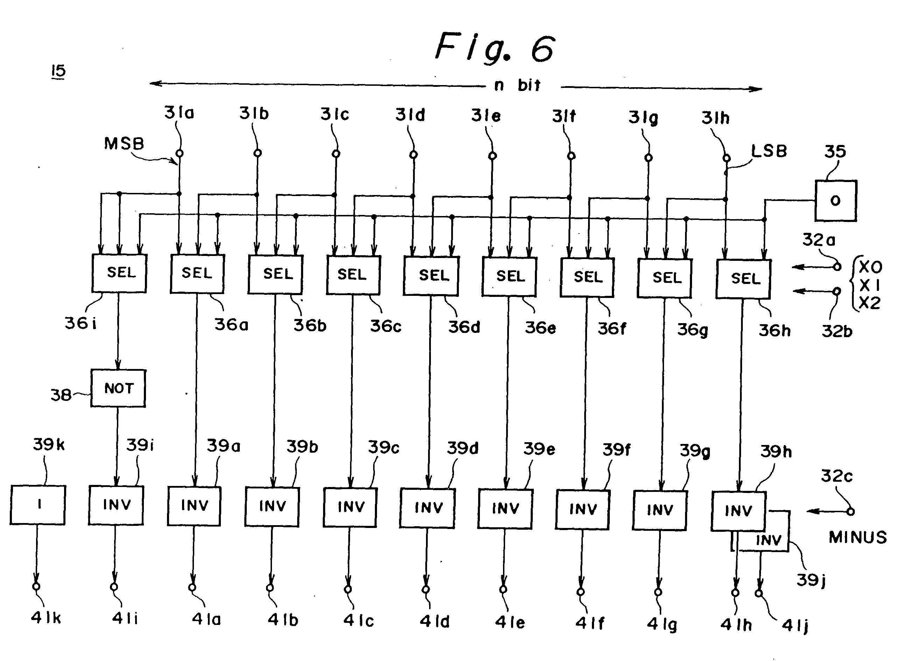

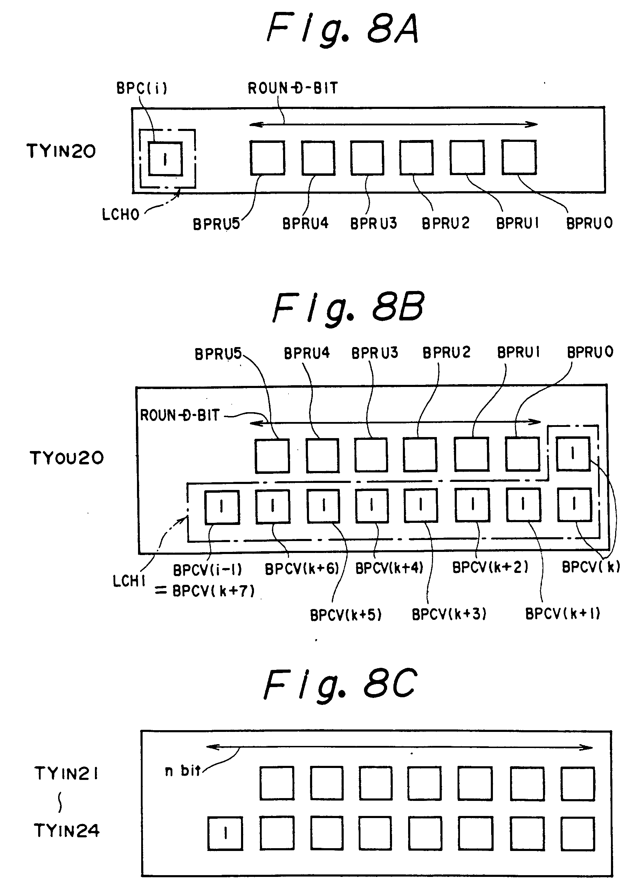

Figs. 6 and 7 show the construction of the PPGs 15 to 18.

The multiplicand of n bits which is stored in the register 6 is supplied to selectors 36a to 36i through terminals 31a to 31h, respectively. In addition, in a register 35, data (= "0") is stored. This data is supplied to the selectors 36a to 36i.

The MSB of the multiplicand which is supplied through the terminal 31a is supplied to the selector 36i as data of two bits. In addition, the data (= "0") which is stored in the register 35 is supplied to the selector 36i as data of one bit. On the other hand, the data of two bits of the multiplicand which are supplied through the terminals 31a and 31b are supplied to the selector 36a. In addition, the data (= "0") of one bit which is stored in the register 35 is supplied to the selector 36a.

Data of two bits which is received from the terminals 31b and 31c and data of one bit which is received from the register 35 are supplied to the selector 36b. Data of two bits which is received from the terminals 31c and 31d and data of one bit which is received from the register 35 are supplied to the selector 36c.

Data of two bits which is received from the terminals 31d and 31e and data of one bit which is received from the register 35 are supplied to the selector 36d. Data of two bits which is received from the terminals 31e and 31f and data of one bit which is received from the register 35 are supplied to the selector 36e.

Data of two bits which is received from the terminals 31f and 31g and data of one bit which is received from the register 35 are supplied to the selector 36f. Data of two bits which is received from the terminals 31g and 31h and data of one bit which is received from the register 35 are supplied to the selector 36g. Data of one bit which is received from the terminal 31h and data of one bit which is received from the register 35 are supplied to the selector 36h.

In each of the selectors 36a to 36i except for the selector 36h, one of three inputs is selected and then output. This selection in the selectors 36a to 36i is performed in accordance with a signal which represents the magnification of a partial product, the signal being supplied through terminals 32a and 32b. In the selector 36h, one of two inputs is selected and then output.

When the signal which represents the magnification is (= 0), in the selectors 36a to 36i, the data (= "0") which is received from the register 35 is selected and then output.

When the signal which represents the magnification is (= 1), in the selectors 36a to 36h, the respective inputs of the terminals 36a to 36h are selected and then output. For example, in the selector 36a, the input of the terminal 31a is selected. In the selector 36b, the input of the terminal 31b is selected. Likewise, in the selectors 36c to 36h, the respective inputs of the terminals 31c to 31h are selected.

When the signal which represents the magnification is (= 2), in each of the selectors 36a to 36g and 36i, data which is supplied from a one-bit lower terminal of the terminals 31a to 31h is shifted and selected. For example, in the selector 36i, the input of the terminal 31a is selected. In the selector 36a, the input of the terminal 31b is selected. Likewise, in the selectors 36b to 36g, the respective inputs of the terminals 31c to 31h are selected.

The output of the selector 36i is supplied to an inverter circuit 39i through a NOT circuit 38. The outputs of the selectors 36a to 36g are supplied to inverter circuits 39a to 39g, respectively. The output of the selector 36h is supplied to inverter circuits 39h and 39i.

In a register 39k, data (= "1") is stored. This data is obtained from a terminal 41k.

Fig. 7 shows the construction of the inverter circuits 39a to 39j.

In the construction shown in Fig. 7, an input is supplied to both an inverter 62 and a selector 63. In the inverter 62, the input signal is inverted. The resultant inverted signal is supplied to the selector 63.

In the selector 63, one of two inputs is selected in accordance with the state of the control signal (MINUS) which is supplied from a terminal 61b. The selected signal is obtained from a terminal 61c. In other words, when a polarity signal which is supplied from each of the BEMs 8 to 11 is minus, in the inverter 63, the inverted signal which is formed by the inverter 62 is selected. On the other hand, when the polarity signal is plus, in the selector 63, a signal which does not pass through the inverter 62 is selected. Thus, the outputs of the inverter circuits 39a to 39j are obtained from the terminals 41a to 41j, respectively.

Figs. 8A to 8C describe the initial value setting circuit 20.

Fig. 8A shows a data input format TYIN20 of the initial value setting circuit 20. In the data input format TYIN20 of the initial value setting circuit 20, round bits BPRU0 to BPRU5 and a complement processing bit BPC(i) are set in digits shown in the figures (i.e., bit positions).

In Fig. 8B, a data output format TYOU20 of the initial value setting circuit 20 is shown. The data output format TYOU20 is converted from the data input format TYIN20 so that the data input format TYIN20 can accord with the data input format of the BRAs 21 to 24. Fig. 8C shows respective data input formats TYIN21 to TYIN24 of the BRAs 21 to 24.

The data output format TYOU20 of the output of the initial value setting circuit 20 consists of the round bits BPRU0 to BPRU5 and conversion bits BPCV(k), BPCV(k + 1), BPCV(k + 2), ..., and BPCV(i - 1) which are equivalent to the complement processing bit BPC (i). The data output format TYOU20 is equal to each of the respective data input formats TYIN21 to TY24 of the BRAs 21 to 24 shown in Fig. 8C. In the example of Fig. 8B, the conversion bit BPCV(i - 1) is equal to the conversion bit BPCV(k + 7).

In Figs. 8A and 8B, the suffixes (k) to (i) of the conversion bit BPCV represent digit numbers thereof (namely, $2^k$ to $2^i$). Thus, the complement processing bit BPC which is represented with the alternate long and short dash line LCH 0 has a value of ($2^i$). Thus, the conversion bits BPCV(k) to BPCV(i - 1) which is represented with the alternate long and short dash line LCH 1 have a value of ($2 \cdot 2^k + 2^{(k+1)} + 2^{(K+2)} + 2^{(k+3)} + .... + 2^{(i-1)}$).

Thus, according to Figs. 8A and 8B and the above-mentioned description, the value of ($2^i$) of the complement processing bit BPC and the value of ($2 \cdot 2^k + 2^{(k+1)} + 2^{(K+2)} + 2^{(k+3)} + .... + 2^{(i-1)}$) are equivalent as shown in the following equation.

$$2^i = \sum_{n=k}^{i-1} 2^n + 2^k$$

As described-above, the complement processing bit BPC(i) [= (2i)] is substituted into the conversion bits BPCV(k) to BPCV(i - 1) which are equivalent thereto. In addition, the conversion bits BPCV(k) to BPCV(i - 1) and the round bits BPRU0 to BPRU5 are set to the data output format TYOU20 of the initial value setting circuit 20 so that the data output format TYOU20 can accord with the respective data input formats TYIN21 to TYIN24 of the BRA21 to BRA24.

Thus, the construction for adding the complement processing bit BPC(i) to the BRA 21 can be omitted. Therefore, since all the BRAs 21 to 24 can have the same construction, they can be used as basic circuits.

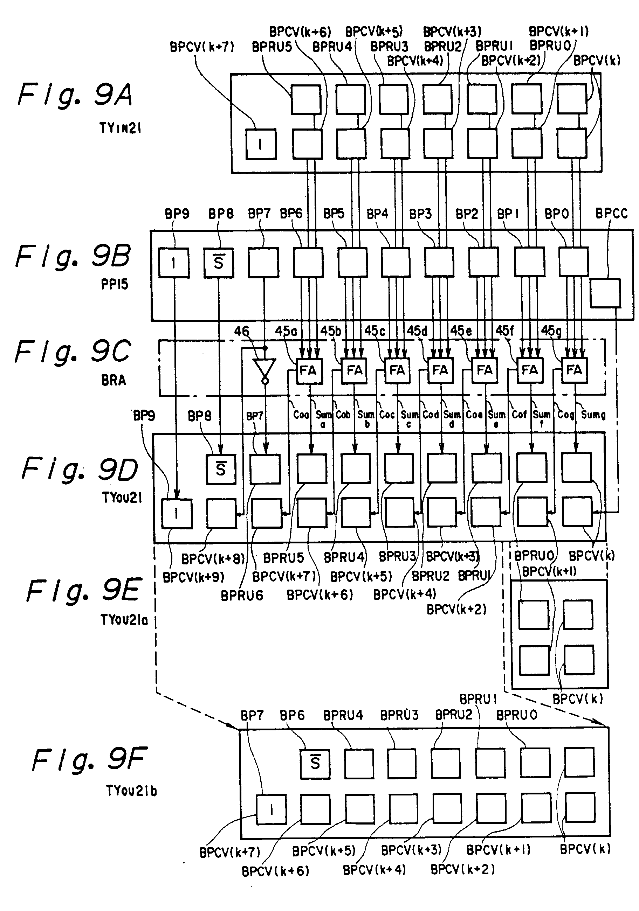

Figs. 9A to 9F describe the above-mentioned BRAs 21 to 24 and shows their construction. In these figures, only the BRA 21 is described as an example. However, this description also applies to the other BRAs 22 to 24.

Fig. 9A shows the data input format TYIN21 of the BRA 21. This data input format TYIN21 accords with the data output format TYOU20 of the initial value setting circuit 20 which is followed by the BRA 21. This data input format TYIN21 consists of the round bits BPRU0 to BPRU5 and the conversion bits BPCV(k), BPCV(k + 1), BPCV(k + 2), ... , and BPCV(i - 1).

Fig. 9B shows an example of a partial product PP15 which is supplied from the PPG 15 to BRA 21. In this partial product PP15, a multiplicand of eight bits is represented with bits BP0 to BP7. In addition, the position of "1" which is added when converted into the notation using the complement of 2 is represented with a bit BPCC. In the partial product PP15, the bits BP9 and BP8 on the MSB side are represented with [(1) (S*)] because of the calculating process of the complement of 2. The "*" in this expression represents the state where the polarity has been inverted.

Fig. 9C shows the construction of the BRA 21.

In the construction of Fig. 9C, the BRA 21 consists of adders 45a to 45g and an inverter 46.

The adders 45a to 45g are full adders. In each of these adders 45a to 45g, the data input format TYIN21 and the partial product PP15 are added bit by bit so as to obtain an addition output Sum and a carry output Co. With the addition output Sum and the carry output Co, the data output format TYOU21 shown in Fig. 9D is formed.

In the adder 45g, the conversion bit BPCV(k) of the data input format TYIN20 and the bit BP0 of the partial product PP15 are added so as to obtain an addition output Sumg and an output Cog. The addition output Sumg is the conversion bit BPCV(k) of the data output format TYOU21. The carry output Cog is the conversion bit BPCV(k + 1) of the data output format TYOU21. The complement processing bit BPCC of the partial product PP15 is the conversion bit BPCV(k) of the data output format TYOU21.

In the adder 45f, the round bit BPRU0 of the data input format TYIN20, the conversion bit BPCV(k + 1), and the bit BP1 are added so as to obtain an addition output Sumf and a carry output Cof. The addition output Sumf is the round bit BPRU0 of the data output format TYOU21. The carry output Cof is the conversion bit BPCV(k + 2) of the data output format TYOU21.

In the adder 45e, the round bit BPRU1, the conversion bit BPCV(k + 2), and the bit BP2 are added so as to obtain an addition output Sume and a carry output Coe. The addition output Sume is the round bit BPRU1 of the data output format TYOU21. The carry output Coe is the conversion bit BPCV(k + 3) of the data output format TYOU21.

In the adder 45d, the round bit BPRU2, the conversion bit BPCV(k + 3), and the bit BP3 are added so as to obtain an addition output Sumd and a carry output Cod. The addition output Sumd is the round bit BPRU2 of the data output format TYOU21. The carry output Cod is the conversion bit BPCV(k + 4) of the data output format TYOU21.

In the adder 45c, the round bit BPRU3, the conversion bit BPCV(k + 4), and the bit BP4 are added so as to obtain an addition output Sumc and a carry output Coc. The addition output Sumc is the round bit BPRU3 of the data output format TYOU21. The carry output Coc is the conversion bit BPCV(k + 5) of the data output format TYOU21.

In the adder 45b, the round bit BPRU4, the conversion bit BPCV(k + 5), and the bit BP5 are added so as to obtain an addition output Sumb and a carry output Cob. The addition output Sumb is the round bit BPRU4 of the data output format TYOU21. The carry output Cob is the conversion bit BPCV(k + 6) of the data output format TYOU21.

In the adder 45a, the round bit BPRU5, the conversion bit BPCV(k + 6), and the bit BP6 are added so as to obtain an addition output Suma and a carry output Coa. The addition output Suma is the round bit BPRU5 of the data output format TYOU21. The carry output Coa is the conversion bit BPCV(k + 7) of the data output format TYOU21.

As shown in Figs. 9A to 9F, the bit BP7 of the partial product PP15 is the conversion bit BPCV(k + 8) of the data output format TYOU21. The inverted output obtained through the inverter 46 is the bit BP7 of the data output format TYOU21. The bit BP8 which represents the polarity of the partial product PP15 is the bit BP8 which represents the polarity in the data output format TYOU21. In addition, the bit BP9 which is "1" is the bit BP9 which is "1" in the data output format TYOU21.

As shown in Figs. 9D, 9E, and 9F, the data output format TYOU21 is separated into a data output format TYOU21a and a data output format TYOU21b, the data output format TYOU21a being supplied to the CRA 4, the data output format TYOU21b being supplied to the BRA 22 which follows the BRA 21.

The data output format TYOU21a consists of conversion bits BPCV(k) and BPCV(k + 1) and a round bit BPRU0 as shown in Fig. 9E. On the other hand, the data output format TYOU21b consists of conversion bits BPCV(k + 2) to BPCV(k + 8), round bits BPRU1 to BPRU5, and bits BP7 to BP9 as shown in Fig. 9D.

In the BRA 21, the data output format shown in Fig. 9D is converted into that shown in Fig. 9F so that the data output format TYOU21 can accord with a data input format TYIN22 of the BRA 22 which follows the BRA 21. In other words, as shown in Fig. 9F, the conversion bits BPCV(k + 2) to BPCV(k + 8) shown in Fig. 9D are converted into the conversion bits BPCV(k) to BPCV(k + 6). In addition, the round bit BPRU1 shown in Fig. 9D is converted into a conversion bit BPCV(k).

Moreover, the round bits BPRU2 to BPRU5 and the bit BP7 shown in Fig. 9D are converted into the round bits BPRU0 to BPRU4. The bit BP8 which represents the polarity is converted into the position of the bit BP6. The bit BP9 which is "1" is converted into the position of the bit BP7 of the data output format TYOU21b so as to perform the complement calculating process.

As described above, in the first embodiment, the complement processing bit BPC(i) [= (21)] which is defined with the data input format TYIN20 of the initial value setting circuit 20 and which is used for the calculating process of the complement of 2 (sign correcting process) is converted into the conversion bits BPCV(k) to BPCV(i - 1) which are equivalent thereto. On the other hand, the data output format TYOU20 of the initial value setting circuit 20 consists of the conversion bits BPCV(k) to BPCV(i - 1) and the round bits BPRU0 to BPRU5, the data output format TYOU20 being in accordance with the respective input formats TYIN21 to TYIN24 of the BRAs 21 to 24.

Thus, the BRAs 21 to 24 can have the same construction without necessity of providing and setting a construction for adding the complement processing bit BPC(i) therein.

Thus, by repeatedly using the basic circuits of the BRAs 21 to 24 which have the same construction, a combination type multiplying circuit can be formed. Therefore, with this construction, a circuit designing work can be effectively performed. In addition, since the BRAs 21 to 24 are not redundantly constructed, with this construction, an optimum designing work can be accomplished.

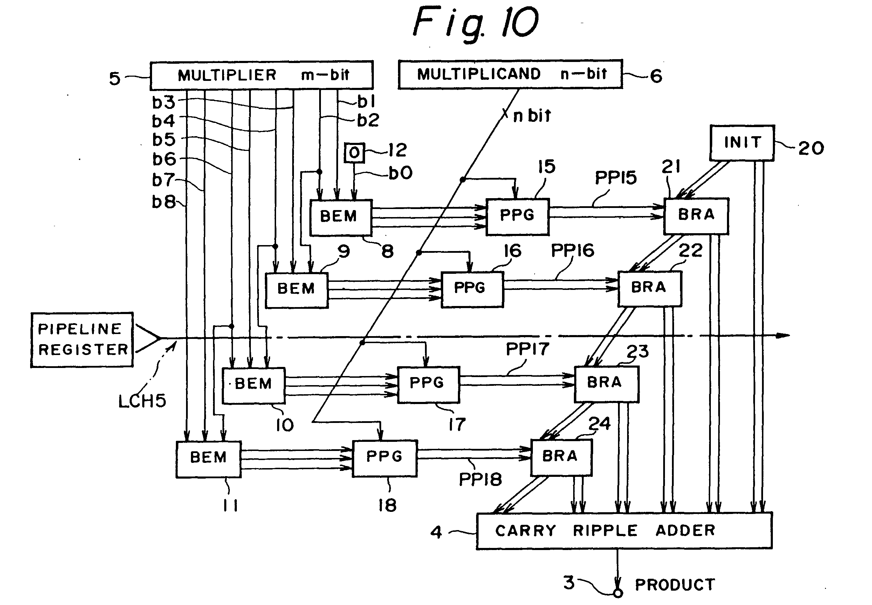

Fig. 10 shows a modification of the above-mentioned first embodiment. In the modification, the present invention is applied to a pipeline type multiplying circuit which performs a multiplication in accordance with the secondary Booth's algorithm.

The modification shown in Fig. 10 differs from the first embodiment in that a pipeline register is disposed at the position of, for example, the alternate long and short dash line Lch 5. With this pipeline register, the calculations performed by the circuit can be speeded up.

The position of the pipeline register is not limited to the position of the alternate long and short dash line Lch 5 shown in Fig. 10. Rather, the pipeline register can be disposed at any position or a plurality of the pipeline registers at a plurality of positions. Since the construction, operation, effects, and so forth of the modification are the same as those of the first embodiment except that the pipeline register is used in the modification, the same portions are represented with the same reference numerals. The portions which have been mentioned will not be repeatedly described for simplicity.

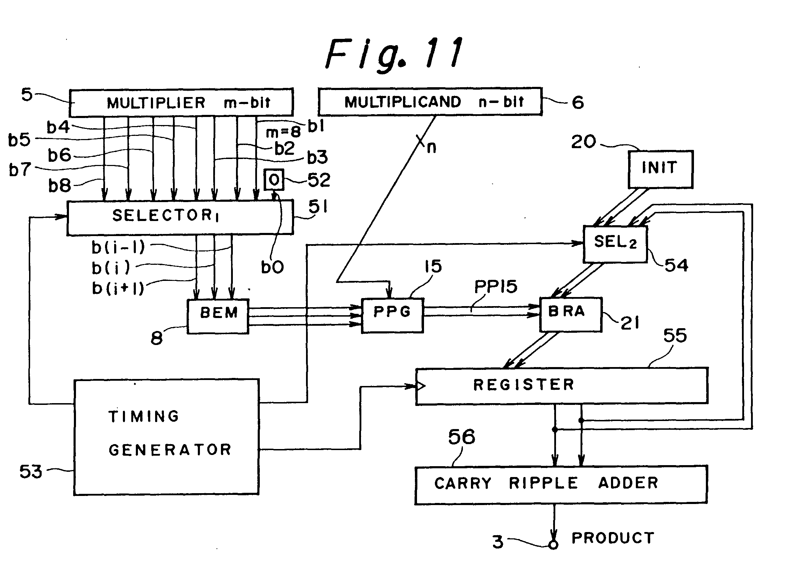

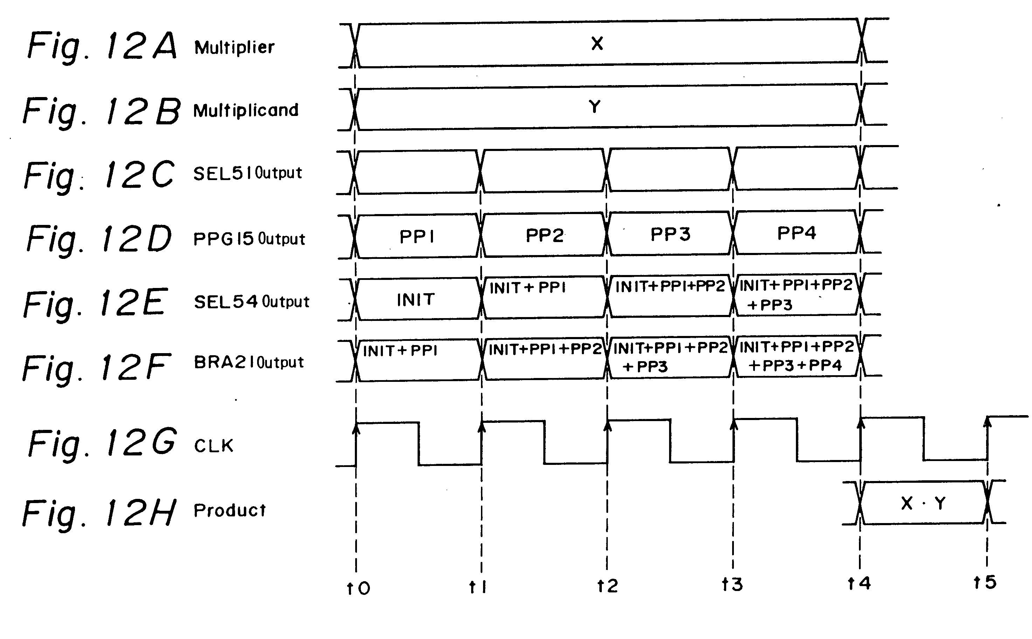

Figs. 11 and 12 show the second embodiment of the present invention. Hereunder, another embodiment will be described with reference to Figs. 11 and 12. In the second embodiment, the present invention is applied to a time-division type multiplying circuit which performs a multiplication in accordance with the secondary Booth's algorithm. In the second embodiment, the same portions as the first embodiment are represented with the same reference numerals thereof. The portions which have been mentioned will not be repeatedly described for simplicity.

The second embodiment shown in Fig. 11 differs from the first embodiment in that only the BRA 21 of the BRAs 21 to 24 is used on a basis of time division. In the second embodiment, the same multiplication as the first embodiment is performed. In addition, since only the BRA 21 is used, only BEM 8 and PPG 15 which accord with the BRA 21 are used.

In the construction shown in Fig. 11, a multiplier of eight bits bl to b8 which is stored in a register 5 is supplied to a selector 51. In a register 52, data [= "0"] is stored. This data is supplied to the selector 51. In addition, a multiplicand of n bits which is stored in a register 6 is supplied to a PPG 15.

In the selector 51, data of successive three bits b(i - 1), b(i), and b(i + 1) necessary for generating a partial product PP is sequentially selected from the multiplier of eight bits in the direction of the MSB in accordance with a timing signal which is supplied from a timing generator 53. Then the selected data of three bits is output from the selector 51. The resultant data of three bits is supplied to a BEM 8.

In the BEM 8, a signal which defines the magnification and sign of a partial product PP15 is formed in accordance with the data of three bits which is supplied. This signal is supplied to the PPG 15.

In the PPG 15, the partial product PP15 where the complement calculating process (sign correcting process) has been performed is formed in accordance with the signal which defines the magnification and sign of the partial product PP15. The partial product PP15 consists of a multiplicand of n bits, two bits [(1) (Si*)], and a bit BPCC. In the two bits [(1) (Si*)], the complement calculating process for the start bit Si has been performed. In other words, the partial product PP15 is represented with (n + 3) bits. This partial product is supplied to the BRA 21.

On the other hand, data including an initial value which is received from an initial value setting circuit 20 is supplied to a selector 54. In the selector 54, either the data including the initial value which is supplied from the initial value setting circuit 20 or data which is fed back from a register 55 is selected in accordance with a timing signal which is supplied from a timing generator 53. When a first addition is performed, in the selector 54, the data including the initial value which is supplied from the initial value setting circuit 20 is selected. When a second or later addition is performed, in the selector 54, the data which is fed back from the register 55 is selected. The data which is selected by the selector 55 is supplied to a BRA 21.

In the BRA 21, the partial product PP15 which is supplied from the PPG 15 and the data which is supplied from the selector 54 are added. Thus, an addition output is formed. This addition output is supplied to the register 55.

In the register 55, the data which is supplied from the BRA 21 is stored in accordance with a clock CLK of the timing generator 53. The data which is stored in the register 55 is supplied to a CRA 56 and the selector 54.

In the CRA 56, data of the data output format TYOU21a shown in Fig. 9E is obtained from the data which is supplied from the register 55. The resultant data is added in each timing of the clock CLK. Moreover, in the CRA 56, a carry addition is performed. The resultant addition output is obtained from a terminal 3.

Figs. 12A to 12H show a timing chart of a circuit operation of the second embodiment. The circuit operation of a loop which consists of the selector 54, the BRA 21, and the register 55 during time periods t0 to t1, t1 to t2, t2 to t3, and t3 to t4 will now be described with reference to Figs. 12A to 12H.

In the PPG 15, as shown in Fig. 12D, during the time period t0 to t1, the partial product PP1 is formed in accordance with a signal which is received from the BEM 8. The partial product PP1 is supplied to the BRA 21. In the selector 54, during the time period t0 to t1, as shown in Fig. 12E, an initial value INIT is selected. The initial value INIT is supplied to the BRA 21.

In the BRA 21, during the time period t0 to tl, the partial product PP1 and the initial value INIT are added. Thus, an addition output [= INIT + PP1] shown in Fig. 12F is formed. The addition output [= INIT + PP1] is supplied to the register 55.

In the register 55, the addition output [= INIT + PP1] is stored in accordance with a timing of the clock CLK. The addition output [= INIT + PP1] is fed back to the selector 54. In addition, the addition output is also supplied to the CRA 56.

In the CRA 56, only the data of the data output format TYOU21a shown in Fig. 9E of the addition output [= INIT + PP1] is stored.

In the PPG 15, during the time period tl to t2, a partial product PP2 is formed in accordance with a signal which is received from the BEM 8. The partial product PP2 is supplied to the BRA 21. In the selector 54, during the time period tl to t2, the addition output [= INIT + PP1] which is fed back from the register 55 is selected and then supplied to the BRA 21.

In the BRA 21, during the time period tl to t2, the partial product PP2 and the addition output [= INIT + PP1] are added. Thus, an addition output [= INIT + PP1 + PP2] is formed. The addition output is supplied to the register 55.

In the register 55, the addition output [= INIT + PP1 + PP2] is stored in accordance with a timing of the clock CLK. This addition output is fed back to the selector 54. In addition, the addition output is supplied to the CRA 56. In the CRA 56, only the data of the data output format TYOU21a shown in Fig. 9E of the addition output is stored.

In the PPG 15, during the time period t2 to t3, a partial product PP3 is formed in accordance with a signal which is received from the BEM 8. The partial product PP3 is supplied to the BRA 21. In the selector 54, during the time period t2 to t3, the addition output [= INIT + PP1 + PP2] which is fed back from the register 55 is selected and then supplied to the BRA 21.

In the BRA 21, during the time period t2 to t3, the partial product PP3 and the addition output [= INIT + PP1 + PP2] are added. Thus, an addition output [= INIT + PP1 + PP2 + PP3] is formed. This addition output is supplied to the register 55.

In the register 55, the addition output [= INIT + PP1 + PP2 + PP3] is stored in accordance with a timing of the clock CLK. This addition output is fed back to the selector 54 and then supplied to the CRA 56. In the CRA 56, only the data of the data output format TYOU21a shown in Fig. 9E of the addition output is stored.

In the PPG 15, during the time period t3 to t4, a partial product PP4 is formed in accordance with a signal which is received from the BEM 8. The partial product PP4 is supplied to the BRA 21. In the selector 54, during the time period t3 to t4, the addition output [= INIT + PP1 + PP2 + PP3] which is fed back from the register 55 is selected and then supplied to the BRA 21.

In the BRA 21, during the time period t3 to t4, the partial product PP4 and the addition output [= INIT + PP1 + PP2 + PP3] are added. Thus, an addition output [= INIT + PP1 + PP2 + PP3 + PP4] is formed. This addition output is supplied to the register 55.

In the register 55, the addition output [= INIT + PP1 + PP2 + PP3 + PP4] is stored in accordance with a timing of the clock CLK. This addition output is fed back to the selector 54. In addition, this addition output is also supplied to the CRA 56. In the CRA 56, only the data of the data output format TYOU21a shown in Fig. 9E of the addition output is stored.

After the time period t4 shown in Fig. 12G, in the CRA 56, a carry addition is performed. Thus, a multiplication result [= X · Y] shown in Fig. 12H is formed. The multiplication result [= X · Y] is obtained from the terminal 3.

As mentioned above, in the second embodiment, since the feedback loop disposed from the register 55 to the selector 54 is provided along with the loop disposed from the selector 54 to the BRA 21 to the register 55 to the CRA 56, the BRA 21 can be used on a basis of time division. Thus, with this construction, a circuit designing work can be effectively performed.

The second embodiment is the same as the first embodiment except that the time-division type multiplying circuit is used. Since the construction, operation, effects, and so forth of the second embodiment are the same as those of the first embodiment except that the second embodiment uses the time-division type multiplying circuit, the same portions are represented with the same reference numerals. The portions which have been mentioned will not be repeatedly described for simplicity.

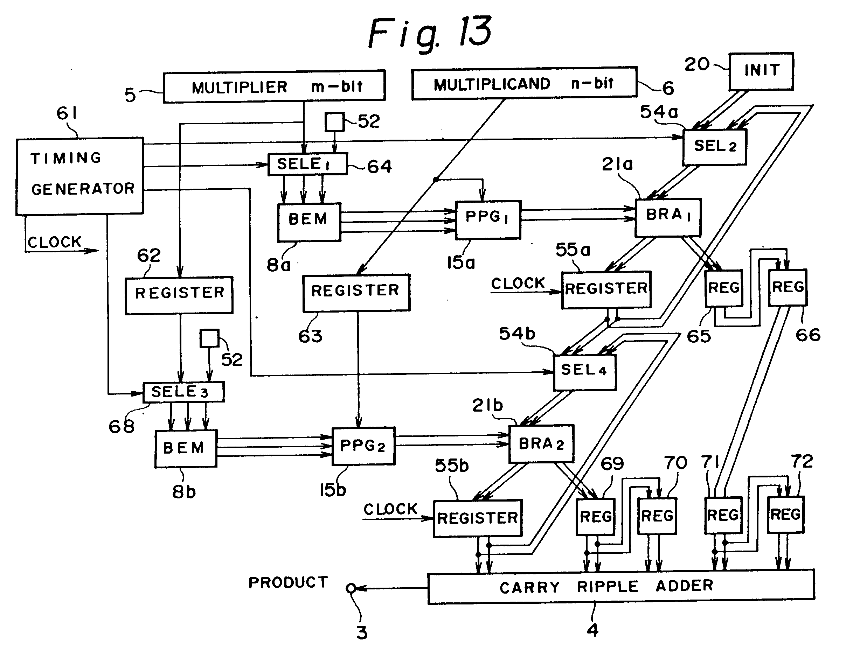

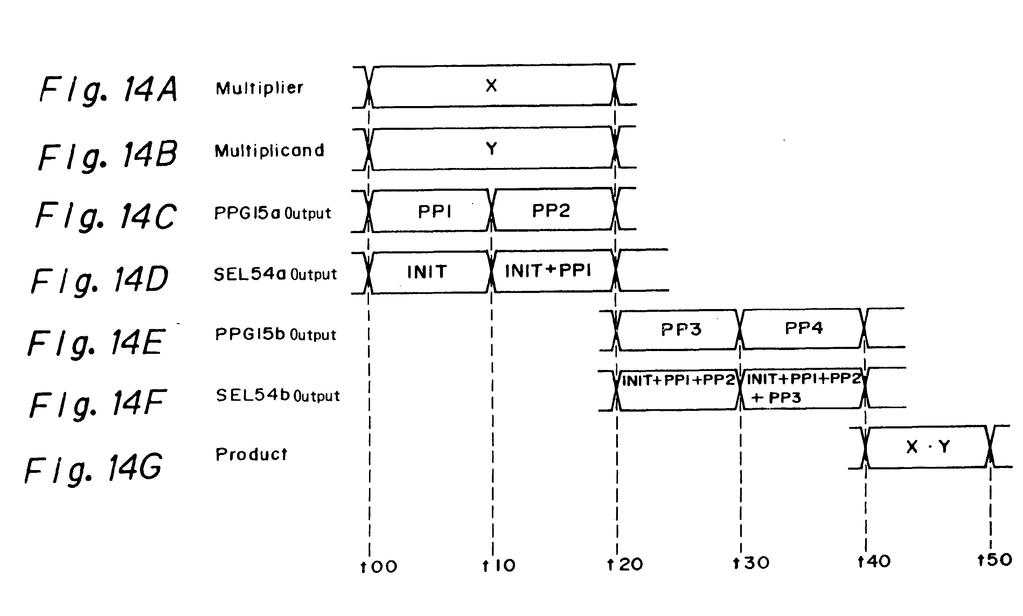

Figs. 13 and 14 show the third embodiment of the present invention. In the third embodiment, the present invention is applied to a time-division type multiplying circuit which performs a multiplication in accordance with the secondary Booth's algorithm. In the third embodiment, the same portions as the first and second embodiments are represented with the same reference numerals thereof for simplicity. The portions which have been mentioned will not be repeatedly described.

The third embodiment shown in Fig. 13 is the same as the second embodiment in that a time-division type multiplying circuit is used. On the other hand, they differ each other in that the third embodiment has two levels of feedback loops.

In the construction shown in Fig. 13, a multiplier of eight bits, bl to b8, which is stored in a register 5 is supplied to a register 62 and a selector 64. In addition, in a register 52, data [= "0"] is stored. This data is supplied to the selector 64. A multiplicand of n bits which is stored in a register 6 is supplied to a register 63 and a PPG 15.

In the selector 64, data of successive three bits b(i - 1), b(i), and b(i + 1) necessary for generating a partial product PP is selected from the multiplier of eight bits in the direction of the MSB in accordance with a clock CLK which is supplied from a timing generator 61. The resultant data of three bits is supplied to a BEM 8a.

In the BEM 8a, a signal which defines the magnification and sign of a partial product is formed in accordance with the data of three bits which is supplied. This signal is supplied to the PPG 15a.

In the PPG 15a, a partial product where the complement calculating process (sign correcting process) has been performed is formed in accordance with the signal which defines the magnification and sign of the partial product. The partial product consists of a multiplicand of n bits, two bits [(1) $(Si^*)$], and a bit BPCC. In the two bits [(1) $(Si^*)$], the complement calculating process for the start bit Si has been performed. In other words, the partial product is represented with (n + 3) bits. This partial product is supplied to the BRA 21a.

On the other hand, data including an initial value which is received from an initial value setting circuit 20 is supplied to a selector 54a. In the selector 54a, either the data including the initial value which is supplied from the initial value setting circuit 20 or data which is fed back from a register 55a is selected in accordance with the clock CLK which is supplied from the timing generator 61. The data selection in the selector 54a is the same as that of the selector 54 of the second embodiment. This portion which has been mentioned will not be repeatedly described for simplicity. The data which is selected by the selector 54a is supplied to a BRA 21a.

In the BRA 21a, the partial product which is supplied from the PPG 15a and the data which is supplied from the selector 54a are added. Thus, an addition output is formed. This addition output is supplied to the register 55a. In addition, only the data of the data output format TYOU21a shown in Figs. 9A to 9F of the addition output is stored in the register 65.

The data which is stored in the register 65 is supplied and stored in registers 66, 71, and 72 one after the other in accordance with timings of the clock CLK. The data which are stored in the registers 71 and 72 are stored in a CRA 4 in accordance with a timing of the clock CLK.

In the register 55a, the data which is supplied from the BRA 21a is stored in accordance with the clock CLK which is supplied from the timing generator 53. In addition, the data is supplied to a selector 54b and the selector 54a, the selector 54b following the selector 54a.

On the other hand, the multiplier of eight bits, b1 to b8, which is stored in the register 62 is supplied to a selector 68. Moreover, in the register 52, data [= "0"] is stored. This data is supplied to the selector 68. The multiplicand of n bits which is stored in the register 63 is supplied to a PPG 15b.

In the selector 68, data of successive three bits b(i - 1), b(i), and b(i + 1) necessary for generating a partial product PP is selected from the multiplier of eight bits in the direction of the MSB in accordance with the clock CLK which is supplied from the timing generator 61. The resultant data of three bits is supplied to a BEM 8b.

In the BEM 8b, a signal which defines the magnification and sign of a partial product is formed in accordance with the data of three bits in the same manner as the BEM 8a. This signal is supplied to the PPG 15b.

In the PPG 15b, a partial product is formed in accordance with the above-mentioned signal which defines the magnification and sign of the partial product in the same manner as the PPG 15a. The partial product is supplied to a BRA 21b.

On the other hand, the value which is output from the register 55a is supplied to a selector 54b. In the selector 54b, either the data which is supplied from the register 55a or the data which is fed back from the register 55b is selected in accordance with the clock CLK which is supplied from the timing generator 61. The data selection of the selector 54b is the same as that of the register 54 of the second embodiment. This portion which has been mentioned will not be repeatedly described for simplicity. The data selected by the selector 54b is supplied to a BRA 21b.

In the BRA 21b, the partial product which is supplied from the PPG 15b and the data which is supplied from the selector 54b are added. Thus, an addition output is formed. This addition output is supplied to the register 55b. Only the data of the data output format TYOU21a shown in Figs. 9A to 9F of the addition output is stored in a register 69.

The data which is stored in the register 69 is supplied and stored in the CRA 4 and a register 70 which follows the register 69 in accordance with timings of the clock CLK. The data which is stored in the register 70 is supplied and stored in the CRA 4 in accordance with a timing of the clock CLK.

In the register 55b, the data which is supplied from the BRA 21b is stored in accordance with the clock CLK which is supplied from the timing generator 61. In addition, the data is supplied to the selector 54b and the CRA 4.

In the CRA 4, the data which are supplied from the registers 55b, 69, 70, 71, and 72 are added. Thereafter, in the CRA 4, a carry addition is performed. The resultant addition output is obtained from a terminal 3.

Figs. 14A to 14G shows a timing chart of the circuit operation of the third embodiment. Hereunder, the circuit operation will be described with reference to Figs. 14A to 14G. Since the functions and constructions of the selectors 64 and 68, the BEMs 8a and 8b, the PPGs 15a and 15b, the BRAs 21a and 21b, the selectors 54a and 54b, the registers 55a and 55b, and so forth of the third embodiment are the same as those of the selector 51, the BEM 8, the PPG 15, the BRA 21, the selector 54, and the register 55 of the second embodiment, the portions which have been mentioned will not be repeatedly described for simplicity.

As shown in Fig. 14A, during the time period t00 to t20, a multiplier X which is received from a register 5 is supplied to a selector 64 and a register 62. In addition, as shown in Fig. 14B, during the time period t00 to t20, a multiplicand Y which is received from a register 6 is supplied to a PPG 15a and a register 63.

In the PPG 15a, as shown in Fig. 14C, during the time period t00 to t10, a partial product PP1 is formed and then supplied to a BRA 21a. Moreover, in the selector 54a, as shown in Fig. 14D, during the time period t00 to t10, an initial value INIT is selected. This initial value INIT is supplied to a BRA 21.

In the BRA 21, during the time period t00 to t10, the partial product PP1 and the initial value INIT are added. Thus, an addition output [= INIT + PP1] is formed. The addition output [= INIT + PP1] is stored in a register 55a. Moreover, the addition output is fed back to the selector 54a. Only data of a data output format TYOU21a shown in Figs. 9A to 9F of the addition output is stored in a register 65.

In the PPG 15a, during the time period t10 to t20, as shown in Fig. 14C, a partial product PP2 is formed and then supplied to the BRA 21a. Moreover, in the selector 54a, during the time period t10 to t20, the addition output [= INIT + PP1] which is fed back from the register 55a is selected and then supplied to the BRA 21a.

In the BRA 21a, during the time period t10 to t20, the partial product PP2 and the addition output [= INIT + PP1] are added. Thus, an addition output [= INIT + PP1 + PP2] is formed. The addition output [= INIT + PP1 + PP2] is stored in the register 55a. In addition, the addition output is fed back to the selector 54a.

During the time period t00 to t11, the content which is stored in the register 65 is stored in the register 66. Only the data of the data output format TYOU21a shown in Figs. 9A to 9F of the addition output [= INIT + PP1 + PP2] during the time period t10 to t20 is stored in the register 65.

In the selector 54b, during the time period t20 to t30, as shown in Fig. 14F, the addition output [= INIT + PP1 + PP2] which is supplied from the register 54b is selected. The addition output is supplied to the BRA 21b. In the PPG 15b, during the time period t20 to t30, as shown in Fig. 14E, a partial product PP3 is formed and then supplied to the BRA 21b.

In the BRA 21b, during the time period t20 to t30, the partial product PP3 and the addition output [= INIT + PP1 + PP2] are added. Thus, an addition output [= INIT + PP1 + PP2 + PP3] is formed. The addition output [= INIT + PP1 + PP2 + PP3] is stored in the register 55b. In addition, the addition output is fed back to the selector 54b. Only the data of the data output format TYOU21a shown in Figs. 9A to 9F of the addition output is supplied and stored in a register 69.

When the addition output [= INIT + PP1 + PP2 + PP3] which is received from the BRA 21b is supplied and stored in the registers 55b and 69, the content which is stored in the register 66 is supplied and stored in a register 71. In addition, the content which is stored in the register 65 is supplied and stored in the register 66.

In the selector 54b, during the time period t30 to t40, the addition output which is received from the register 54b is selected.

In the PPG 15b, during the time period t30 to t40, as shown in Fig. 14E, a partial product PP4 is formed and then supplied to the BRA 21. Moreover, in the selector 54b, during the time period t30 to t40, the addition output [= INIT + PP1 + PP2 + PP3] which is received from the register 54b is selected and then supplied to the BRA 21b.

In the BRA 21b, during the time period t30 to t40, the partial product PP4 and the addition output [= INIT + PP1 + PP2 + PP3] are added. The resultant addition output [= INIT + PP1 + PP2 + PP3 + PP4] is formed. The resultant addition output is supplied to the register 55b.

During the time period t20 to t30, the content which is stored in the register 69 is stored in the register 70. Only the data of the data output format TYOU21a shown in Figs. 9A to 9F of the addition output [= INIT + PP1 + PP2 + PP3 + PP4] during the time period t30 to t40 is supplied and stored in the register 69.

When the addition output [= INIT + PP1 + PP2 + PP3 + PP4] which is received from the BRA 21b is supplied and stored in the registers 55b and 69, the content which is stored in the register 71 is stored in the register 72. In addition, the content which is stored in the register 66 is stored in the register 71.

In the CRA 4, during the time period t30 to t40, the addition output [= INIT + PP1 + PP2 + PP3 + PP4] which is supplied from the register 55b is obtained. Moreover, in the CRA 4, the contents which are stored in the registers 69, 70, 71, and 72 are obtained. After the time period t40 shown in Fig. 14G, in the CRA 4, a carry addition is performed. Thus, a multiplication result [= X· Y] of the multiplier X and the multiplicand Y is formed. The multiplication result [= X ·Y] is obtained from the terminal 3.

Since the construction of the third embodiment is the same as that of the second embodiment, the same portions are represented with the same reference numerals. The portions which have been mentioned will be not be repeatedly described for simplicity.

Having described specific preferred embodiments of the present invention with reference to the accompanying drawings, it is to be understood that the invention is not limited to those precise embodiments, and that various changes and modifications may be effected therein by one skilled in the art without departing from the scope of the invention as defined in the appended claims.

According to the combination type multiplying circuit of the present invention, the same basic circuits in the same construction can be repeatedly used. As a result, with this construction, a circuit designing work can be optimally and effectively performed.

In addition, according to the time-division type multiplying circuit of the present invention, the basic circuits in the same construction can be repeatedly used on a time base. As a result, with this construction, a circuit designing work can be effectively performed.

**Claims**

1. A multiplying circuit for multiplying a multiplicand by a multiplier, comprising:

   partial product generating means (15-18) for forming a plurality of partial products in accordance with a Booth's algorithm; and
   adding means (4, 21-24; 21, 56) for adding said partial products,

   characterised in that
   said circuit further comprises:

   means (15-18) for inverting the most significant bits ($S_i$) of each partial product such that subsequent addition of a complement processing bit to the inverted most significant bits of all the partial products would produce the twos-complement of the most significant bits for performing a sign correcting process of said partial products; and
   setting means (20) for supplying data representing a complement processing bit for said sign correcting process said data comprising two bits of value 1 in the bit position k and a bit of value 1 in each bit position from (k+1) to (i-1), where i is the bit position of said complement processing bit and k<(i-1);
   said adding means (4, 21-24; 21, 56) is arranged to add said partial products and the data supplied from the setting means by successively adding respective partial products in an adder circuit (21),
   said setting means is adapted to supply said data representing a complement processing bit for said sign correcting process in a format equivalent to the data input format of said adder circuit (21), and

at least a part of a data input format of said adder circuit (21) is the same as at least a part of a data output format thereof.

2. A multiplying circuit according to claim 1, wherein said adding means comprises a plurality of said adder circuits (21-24) connected in series and each performing a successive addition by receiving as inputs one of said partial products and either the data supplied from the setting means (20) or the accumulated sum from a preceding adder circuit.

3. A multiplying circuit according to claim 1, further comprising:

data selecting means (54) disposed between said setting means (20) and said adder circuit (21) of said adding means; and
data storing means (55) disposed downstream of said adder circuit (21) of said adding means and arranged to feed back an output of said data storing means (55) to an input of said data selecting means (54) to be supplied to said adder circuit (21) as an accumulated sum to which a further partial product is to be added.

4. A multiplying circuit according to any one of the preceding claims, wherein said adder circuit (21) or each of said plurality of adder circuits (21-24) is a Booth's redundancy adder.

5. A multiplying circuit according to claim 4, wherein said adding means further comprises at least one carry ripple adder (4;56) for performing a carry ripple addition.

6. A multiplying circuit according to claim 1, wherein said adding means comprises:

a plurality of Booth's redundancy adders (21-24) connected in series for performing an addition based on the output of each of said plurality of partial product generating means and the output of said setting means (20), said plurality of Booth's redundancy adders having the same construction; and
at least one carry ripple adder (4) for performing a carry ripple addition based on each output of said plurality of Booth's redundancy adders and the output of said setting means (20).

7. A multiplying circuit according to claim 6, wherein:

each of said plurality of Booth's redundancy adders (21-24) comprises a plurality of adders (45) and one inverter (46), each of said plurality of adders (45) outputting an addition bit and a carry bit as the output bits of the respective Booth's redundancy adder (21-24); and
the setting means (20) supplies a plurality of output bits to the carry ripple adder (4) and a plurality of output bits to the first Booth's redundancy adder (21) in the series, and each of the Booth's redundancy adders (21-23) supplies a plurality of its output addition bits and a plurality of its output carry bits to the carry ripple adder (4) except for the final Booth's redundancy adder (24) in the series which supplies all of its output bits to the carry ripple adder, whereby the carry ripple adder performs the carry addition based on output bits of each of said plurality of Booth's redundancy adders and output bits of said setting circuit.

8. A multiplying circuit according to claim 6 or 7, further comprising

means (8-11) for dividing the input data of the multiplier into predetermined blocks of bits which overlap one another by at least one bit and for performing preprocessing of said blocks by respective ones of a plurality of Booth's encoder modules; and
said partial product generating means (15-18) comprise a plurality of means each for generating a respective partial product from the output of a respective one of said plurality of Booth's encoder modules and from the data of said multiplicand.

9. A multiplying circuit according to claim 1, wherein the circuit further comprises:

selecting means (51) for selectively outputting the input data of said multiplier in predetermined blocks of bits every predetermined period of time, where said blocks of bits overlap by at least one bit; and
a single Booth's encoder module (8) for performing preprocessing of each successive block of bits output by said selecting means, said partial product generating means comprises a single partial product generating means (15) for generating successive partial products from the respective successive outputs of said Booth's encoder module (8) and from the data of said multiplicand;
said adding means comprises:

a single Booth's redundancy adder (21) for performing successive cumulative additions of the successive partial products to the output of said setting means (20)

means (55) for temporarily storing the output of said Booth's redundancy adder and means (54) for thereafter feeding back the output to the input of said Booth's redundancy adder (21) every predetermined period of time; and

at least one carry ripple adder (56) for performing a carry ripple addition based on an output of said Booth's redundancy adder.

10. A multiplying circuit according to claim 9, further comprising:

an additional selecting means (51) for selectively outputting the input data of said multiplier in predetermined blocks of bits every predetermined period of time, where said blocks of bits overlap by at least one bit;

an additional single Booth's encoder module (8b) for performing preprocessing of each successive block of bits output by said additional selecting means (68);

an additional partial product generating means (15b) for generating successive partial products from the respective successive outputs of said additional Booth's encoder module and from the data of said multiplicand; and

an additional Booth's redundancy adder (216) for performing successive cumulative additions of the successive partial products from said additional partial product generating means (15b) to the output of said first mentioned means, and wherein said at least one carry ripple adder (4) is for performing a carry addition based on outputs of said first mentioned Booth's redundancy adder (21a) and said additional Booth's redundancy adder (21b).

11. A multiplying circuit according to claim 10, further comprising a plurality of registers disposed between said Booth's redundancy adders (21a, 21b) and said carry ripple adder (4) so as to supply successively generated output bits for a single multiplication at the same predetermined period of time.

12. A multiplying circuit according to any one of claims 1 to 11, wherein k is the bit position of the least significant bit of the data supplied by the setting circuit (20).

13. A multiplying circuit according to any one of claims 1 to 12, wherein data representing an initial value is supplied by said setting means, comprising bits in bit positions (i - 1) to (k + 1).

14. A multiplying circuit according to claim 13, wherein said data representing an initial value comprises rounding data.

## Revendications

1. Circuit de multiplication destiné à multiplier un multiplicande par un multiplicateur, comprenant :

des moyens (15-18) générateurs de produits partiels servant à former une pluralité de produits partiels selon un algorithme de Booth ; et un moyen d'addition (4, 21-24 ; 21, 56) servant à additionner lesdits produits partiels,

caractérisé en ce que ledit circuit comprend en outre : un moyen (15-18) servant à inverser les bits les plus significatifs ($S_i$) de chaque produit partiel de façon que l'addition ultérieure d'un bit de traitement de complément aux bits les plus significatifs inversés de tous les produits partiels produise le complément à deux des bits les plus significatifs afin d'effectuer un processus de correction de signe desdits produits partiels ; et

un moyen de positionnement (20) servant à fournir des données qui représentent un bit de traitement de complément pour ledit processus de correction de signe, lesdites données comprenant deux bits de valeur 1 à la position de bit k et un bit de valeur 1 dans chaque position de bit (k+1) à (i-1), où i est la position de bit dudit bit de traitement de complément et k < (i-1) ;

et en ce que ledit moyen d'addition (4, 21-24 ; 21, 56) est conçu pour additionner lesdits produits partiels et les données fournies par le moyen de positionnement en additionnant successivement des produits partiels respectifs dans un circuit additionneur (21),

ledit moyen de positionnement est conçu pour fournir lesdites données représentant un bit de traitement de complément pour ledit processus de correction de signe dans un format équivalent au format d'entrée de données dudit circuit additionneur (21), et

au moins une partie d'un format d'entrée de données dudit circuit additionneur (21) est identique à au moins une partie d'un format de sortie de données de celui-ci.

2. Circuit de multiplication selon la revendication 1, où ledit moyen d'addition comprend une pluralité desdits circuits additionneurs (21-24) connectés en série et effectuant chacun une addition successive du fait qu'ils reçoivent comme signaux d'entrée l'un desdits produits partiels et ou bien les données fournies par le moyen de positionnement (20) ou bien la somme cumulée venant d'un circuit additionneur précédent.

3. Circuit de multiplication selon la revendication 1, comprenant en outre :

> un moyen (54) de sélection de données disposé entre ledit moyen de positionnement (20) et ledit circuit additionneur (21) dudit moyen d'addition ; et
> un moyen (55) de stockage de données disposé en aval dudit circuit additionneur (21) dudit moyen d'addition et conçu pour renvoyer en réaction le signal de sortie dudit moyen (55) de stockage de données sur une entrée dudit moyen (54) de sélection de données à délivrer audit circuit additionneur (21) sous la forme d'une somme cumulée à laquelle un autre produit partiel doit être ajouté.

4. Circuit de multiplication selon l'une quelconque des revendications précédentes, où ledit circuit additionneur (21) ou chaque circuit de ladite pluralité de circuits additionneurs (21-24) est un additionneur de redondance de Booth.

5. Circuit de multiplication selon la revendication 4, où ledit moyen d'addition comprend en outre au moins un additionneur avec retenue (4 ; 56) servant à effectuer un addition avec retenue.

6. Circuit de multiplication selon la revendication 1, où ledit moyen d'addition comprend :

> une pluralité d'additionneurs de redondance de Booth (21-24) connectés en série afin d'effectuer une addition sur la base du signal de sortie de chaque moyen de ladite pluralité de moyens générateurs de produits partiels et du signal de sortie dudit moyen de positionnement (20), ladite pluralité d'additionneurs de redondance de Booth ayant la même structure ; et
> au moins un additionneur avec retenue (4) servant à effectuer une addition avec retenue sur la base de chaque signal de sortie de ladite pluralité d'additionneurs de redondance de Booth et du signal de sortie dudit moyen de positionnement (20).

7. Circuit de multiplication selon la revendication 6, où :

> chaque additionneur de ladite pluralité d'additionneurs de redondance de Booth (21-24) comprend une pluralité d'additionneurs (45) et un unique inverseur (46), chaque additionneur de ladite pluralité d'additionneurs (45) délivrant un bit d'addition et un bit de retenue au titre des bits de sortie de l'additionneur de redondance de Booth respectif (21-24) ; et
> le moyen de positionnement (20) fournit une pluralité de bits de sortie à l'additionneur avec retenue (4) et une pluralité de bits de sortie au premier additionneur de redondance de Booth (21) de la série, et chacun des additionneurs de redondance de Booth (21-23) fournit une pluralité de ses bits d'addition de sortie et une pluralité de ses bits de retenue de sortie à l'additionneur avec retenue (4), sauf en ce qui concerne l'additionneur de redondance de Booth (24) final de la série, qui fournit tous ces bits de sortie à l'additionneur avec retenue, de sorte que l'additionneur avec retenue effectue l'addition avec retenue sur la base des bits de sortie de chaque additionneur de ladite pluralité d'additionneurs de redondance de Booth et des bits de sortie dudit circuit de positionnement.

8. Circuit de multiplication selon la revendication 6 ou 7, comprenant en outre :

> un moyen (8-11) servant à diviser les données d'entrée du multiplicateur en blocs prédéterminés de bits qui se chevauchent l'un l'autre d'au moins un bit et à effectuer un prétraitement desdits blocs au moyen de modules respectifs d'une pluralité de modules codeurs de Booth ; et
> lesdits moyens générateurs de produits partiels (15-18) comprennent une pluralité de moyens servant chacun à produire un produit partiel respectif à partir du signal de sortie d'un module respectif de ladite pluralité de modules codeurs de Booth et à partir des données dudit multiplicande.

9. Circuit de multiplication selon la revendication 1, où le circuit comprend en outre :

> un moyen de sélection (51) servant à délivrer sélectivement les données d'entrée dudit multiplicateur dans des blocs prédéterminés de bits à chaque période période prédéterminée de temps, où lesdits blocs de bits se chevauchent d'au moins un bit ; et
> un unique module codeur de Booth (8) servant à effectuer un prétraitement de chaque bloc successif de bits délivré par ledit moyen de sélection,
> lesdits moyens générateurs de produits partiels comprennent un unique moyen (15) générateur de produits partiels servant à produire des produits partiels successifs à partir des signaux de sortie respectifs dudit module codeur de Booth (8) et à partir des données dudit multiplicande ;
> ledit moyen d'addition comprenant :
>
> > un unique additionneur de redondance de Booth (21) servant à effectuer des additions cumulatives successives des produits partiels successifs au signal de sortie dudit moyen de positionnement (20) ;

un moyen (55) servant à stocker temporairement le signal de sortie dudit additionneur de redondance de Booth et un moyen (55) servant, après cela, à renvoyer en réaction le signal de sortie sur l'entrée dudit additionneur de redondance de Booth (21) à chaque période prédéterminée de temps ; et

au moins un additionneur avec retenue (56) servant à effectuer une addition avec retenue sur la base d'un signal de sortie dudit additionneur de redondance de Booth.

10. Circuit de multiplication selon la revendication 9, comprenant en outre :

un moyen de sélection supplémentaire (51) servant à délivrer sélectivement les données d'entrée dudit multiplicateur en blocs prédéterminés de bits à chaque période prédéterminée de temps, où lesdits blocs de bits se chevauchent d'au moins un bit ;

un unique module codeur de Booth supplémentaire (8b) servant à effectuer un prétraitement de chaque bloc successif de bits délivré par ledit moyen de sélection supplémentaire (68) ;

un moyen supplémentaire (15b) générateur de produits partiels servant à produire des produits partiels successifs à partir des signaux de sortie successifs respectifs dudit module codeur de Booth supplémentaire et à partir des données dudit multiplicande ; et

un additionneur de redondance de Booth supplémentaire (216) servant à effectuer des additions cumulatives successives des produits partiels successifs venant dudit moyen supplémentaire (15b) générateur de produits partiels au signal de sortie dudit moyen mentionné en premier, et

où ledit au moins un additionneur avec retenue (4) est destiné à effectuer une addition avec retenue sur la base des signaux de sortie dudit additionneur de redondance de Booth (21a) mentionné en premier et dudit additionneur de redondance de Booth supplémentaire (21b).

11. Circuit de multiplication selon la revendication 10, comprenant en outre une pluralité de registres disposés entre lesdits additionneurs de redondance de Booth (21a, 21b) et ledit additionneur avec retenue (4) de façon à délivrer des bits de sortie produits successivement pour une unique multiplication à la même période prédéterminée de temps.

12. Circuit de multiplication selon l'une quelconque des revendications 1 à 11, où k est la position de bit du bit le moins significatif des données fournies par le circuit de positionnement (20).

13. Circuit de multiplication selon l'une quelconque des revendications 1 à 12, où des données représentant une valeur initiale sont fournies par ledit moyen de positionnement, comprenant des bits situés en des positions de bit (i-1) à (k+1).

14. Circuit de multiplication selon la revendication 13, où lesdites données représentant une valeur initiale comprennent des données d'arrondissage.


## Patentansprüche

1. Multiplizierschaltung zum Multiplizieren eines Multiplikanden mit einem Multiplikator

mit einer Teilproduktgenerierungseinrichtung (15-18) zur Bildung mehrerer Teilprodukte nach einem Booth-Algorithmus, und mit einer Addiereinrichtung (4, 21-24; 21, 56) zum Addieren der Teilprodukte,

**dadurch gekennzeichnet,**
daß die Schaltung ferner aufweist:

eine Einrichtung (15-18) zum Invertieren der höchstwertigen Bits ($S_i$) jedes Teilprodukts in der Weise, daß das anschließende Addieren eines Komplement-Verarbeitungsbits zu den invertierten höchstwertigen Bits aller Teilprodukte das Zweierkomplement der höchstwertigen Bits zur Durchführung eines Vorzeichen-Korrekturprozesses der Teilprodukte erzeugt, und eine Einstelleinrichtung (20) zur Lieferung von Daten, die ein Komplement-Verarbeitungsbit für den Vorzeichen-Korrekturprozeß repräsentieren, wobei die genannten Daten zwei Bits mit dem Wert 1 in der Bitposition k und ein Bit mit dem Wert 1 in jeder Bitposition von (k+1) bis (i-1) umfassen, wobei i die Position des Komplement-Verarbeitungsbits bedeutet und k < (i-1) ist, daß die Addiereinrichtung (4, 21-24; 21, 56) so angeordnet ist, daß sie die Teilprodukte und die von der Einstelleinrichtung gelieferten Daten durch sukzessives Addieren der betreffenden Teilprodukte in einer Addierschaltung (21) addiert, daß die Einstelleinrichtung so ausgebildet ist, daß sie die Daten, die ein Komplement-Verarbeitungsbit für den Vorzeichen-Korrekturprozeß repräsentieren, in einem Format liefert, das dem Dateneingabeformat der Addierschaltung (21) äquivalent ist,

und daß wenigstens ein Teil des Dateneingabeformats der Addierschaltung (21) der gleiche
ist wie wenigstens ein Teil ihres Datenausgabeformats.

2. Multiplizierschaltung nach Anspruch 1, bei der die
Addiereinrichtung eine Mehrzahl der genannten
Addierschaltungen (21-24) aufweist, die in Reihe
geschaltet sind und jeweils eine sukzessive Addition ausführen, indem sie als Eingangsgrößen eines
der genannten Teilprodukte und entweder die von
der Einstelleinrichtung (20) gelieferten Daten oder
die akkumulierte Summe aus einer vorangehenden
Addierschaltung aufnehmen.

3. Multiplizierschaltung nach Anspruch 1, die ferner
aufweist:

eine Datenauswahleinrichtung (54), die zwischen der Einstelleinrichtung (20) und der Ad-
dierschaltung (21) der Addiereinrichtung ange-
ordnet ist,
und eine Datenspeichereinrichtung (55), die
hinter der Addierschaltung (21) der Addiereinrichtung angeordnet und so ausgebildet ist,
daß sie die Ausgangsgröße der Datenspeichereinrichtung (55), die der Addierschaltung
(21) als akkumulierte Summe zuzuführen ist,
zu der ein weiteres Teilprodukt addiert werden
soll, zu einem Eingang der Datenauswahleinrichtung (54) rückkoppelt.

4. Multiplizierschaltung nach einem der vorhergehenden Ansprüche, bei der die Addierschaltung (21)
oder jede aus der Mehrzahl von Addierschaltungen
(21-24) ein Booth-Redundanz-Addierer ist.

5. Multiplizierschaltung nach Anspruch 4, bei der die
Addiereinrichtung ferner wenigstens einen Carry-
Ripple-Addierer (4; 56) zur Durchführung einer Carry-Ripple-Addition aufweist.

6. Multiplizierschaltung nach Anspruch 1, bei der die
Addiereinrichtung aufweist:

eine Mehrzahl von in Reihe geschalteten
Booth-Redundanz-Addierern (21-24) zur
Durchführung einer Addition auf der Basis der
Ausgangsgröße jeder aus der Mehrzahl von
Teilproduktgenerierungseinrichtungen und der
Ausgangsgröße der Einstelleinrichtung (20),
wobei alle aus Mehrzahl von Booth-Redundanz-Addierern den gleichen Aufbau haben,
und
wenigstens einen Carry-Ripple-Addierer (4)
zur Durchführung einer Carry-Ripple-Addition
auf der Basis jeder der Ausgangsgrößen der
Mehrzahl von Booth-Redundanz-Addierern und der Ausgangsgröße der Einstelleinrichtung
(20).

7. Multiplizierschaltung nach Anspruch 6,

bei der jeder aus der Mehrzahl von Booth-Redundanz-Addierern (21-24) eine Mehrzahl von
Addierern (45) sowie einen Inverter (46) aufweist, wobei jeder aus der Mehrzahl von Addierern (45) ein Additionsbit und ein Übertragsbit
als Ausgangsbits der betreffenden Booth-Redundanz-Addierer (21-24) ausgibt,
und bei die Einstelleinrichtung (20) dem ersten
Booth-Redundanz-Addierer (21) in der Reihe
eine Mehrzahl von Ausgangsbits dem Carry-
Ripple-Addierer (4) und eine Mehrzahl von
Ausgangsbits zuführt, und jeder der Booth-
Redundanz-Addierer (21-23) eine Mehrzahl
seiner Additions-Ausgangsbits und eine Mehrzahl seiner Übertrags-Ausgangsbits dem Carry-Ripple-Addierer (4) zuführt mit Ausnahme
des letzten Booth-Redundanz-Addierers (24)
in der Reihe, der alle seine Additionsbits dem
Carry-Ripple-Addierer zuführt, so daß der Carry-Ripple-Addierer die Übertragsaddition auf
der Basis von Ausgangsbits jedes aus der
Mehrzahl von Booth-Redundanz-Addierern
und von Ausgangsbits der Einstelleinrichtung
zuführt.

8. Multiplizierschaltung nach Anspruch 6 oder 7, die
ferner aufweist:

eine Einrichtung (8-11) zum Teilen der Eingangsdaten des Multiplizierers in vorbestimmte
Bitblöcke, die einander um wenigstens ein Bit
überlappen, und zur Durchführung einer Vor-
verarbeitung dieser Blöcke durch entsprechen-
de Exemplare aus einer Mehrzahl von Booth-
Codier-Modulen,
wobei die Teilproduktgenerierungseinrichtung
(15-18) eine Mehrzahl von Einrichtungen aufweist, deren jede ein entsprechendes Teilprodukt aus der Ausgangsgröße eines entsprechenden Exemplars aus einer Mehrzahl von
Booth-Codier-Modulen und aus den Daten des
Multiplikanden erzeugt.

9. Multiplizierschaltung nach Anspruch 1, die ferner
aufweist:

eine Auswahleinrichtung (51) für die selektive
Ausgabe der Eingangsdaten des Multiplizierers in vorbestimmten Bitblöcken in jeder vorbestimmten Zeitperiode, wobei diese Bitblöcke
einander um wenigstens ein Bit überlappen,
und ein einzelnes Booth-Codier-Modul (8) zur
Vorverarbeitung jedes der von der Auswahleinrichtung ausgegebenen aufeinanderfolgenden Bitblöcke,

wobei die Teilproduktgenerierungseinrichtung eine einzelne Teilproduktgenerierungseinrichtung (15) aufweist zur Erzeugung von aufeinanderfolgenden Teilprodukten aus den betreffenden aufeinanderfolgenden Ausgangsgrößen des Booth-Codier-Moduls (8) und aus den Daten des Multiplikanden,

wobei die Addiereinrichtung aufweist:

einen einzelnen Booth-Redundanz-Addierer (21) zur Durchführung von aufeinanderfolgenden kumulativen Additionen der aufeinanderfolgenden Teilprodukte zu der Ausgangsgröße der Einstelleinrichtung (20),

eine Einrichtung (55) zum temporären Speichern der Ausgangsgröße des Booth-Redundanz-Addierers und eine Einrichtung (54) für das anschließende Rückkoppeln der Ausgangsgröße zu dem Eingang des Booth-Redundanz-Addierers (21) in jeder vorbestimmten Zeitperiode

und wenigstens einen Carry-Ripple-Addierer (56) zur Durchführung einer Carry-Ripple-Addition auf der Basis der Ausgangsgröße des Booth-Redundanz-Addierers.

10. Multiplizierschaltung nach Anspruch 9, die ferner aufweist:

eine zusätzliche Auswahleinrichtung (68) für die selektive Ausgabe der Eingangsdaten des Multiplizierers in vorbestimmten Bitblöcken in jeder vorbestimmten Zeitperiode, wobei diese Bitblöcke einander um wenigstens ein Bit überlappen,

ein zusätzliches einzelnes Booth-Codier-Modul (8b) zur Vorverarbeitung jedes der von der zusätzlichen Auswahleinrichtung (68) ausgegebenen aufeinanderfolgenden Bitblöcke,

eine zusätzliche Teilproduktgenerierungseinrichtung (15b) zur Erzeugung von aufeinanderfolgenden Teilprodukten aus den betreffenden aufeinanderfolgenden Ausgangsgrößen des zusätzlichen Booth-Codier-Moduls und aus den Daten des Multiplikanden,

einen zusätzlichen Booth-Redundanz-Addierer (216) zur Durchführung von aufeinanderfolgenden kumulativen Additionen der aufeinanderfolgenden Teilprodukte aus der zusätzlichen Teilproduktgenerierungseinrichtung (15b) zu der Ausgangsgröße der ersterwähnter Einrichtung,

wobei der wenigstens eine Carry-Ripple-Addierer (4) zur Durchführung einer Übertrags addition auf der Basis von Ausgangsgrößen des ersterwähnten Booth-Redundanz-Addierers (21a) und des zusätzlichen Booth-Redundanz-Addierers (21b) dient.

11. Multiplizierschaltung nach Anspruch 10, die ferner aufweist:

eine Mehrzahl von Registern, die zwischen den Booth-Redundanz-Addierern (21a, 21b) und dem Carry-Ripple-Addierer (4) so angeordnet sind, daß sie in der gleichen vorbestimmten Zeitperiode sukzessiv erzeugte Ausgangsbits für eine einzelne Multiplikation liefern.

12. Multiplizierschaltung nach einem der Ansprüche 1 bis 11, bei der $k$ die Bitposition des niedrigstwertigen Bits der von der Einstelleinrichtung (20) gelieferten Daten ist.

13. Multiplizierschaltung nach einem der Ansprüche 1 bis 12, bei der die Einstelleinrichtung Daten liefert, die einen Anfangswert repräsentieren und Bits in den Bitpositionen $(i-1)$ bis $(k+1)$ umfassen.

14. Multiplizierschaltung nach Anspruch 13, bei der die einen Anfangswert repräsentierenden Daten Rundungsdaten umfassen.

Fig. 1

Fig. 2

## Fig. 3

205 — MULTIPLIER m-bit    MULTIPLICAND n-bit — 206

(m=8)

b7  b8  b6  b5  b4  b3  b1  b2  b0  0 — 212

INIT — 220

BEM — 208    PPG 215  PP215    CRA — 221

BEM· — 209    PPG 216  PP216    CRA — 222

b2

BEM — 210    PPG 217  PP217    CRA — 223  224

b4

BEM — 211    PPG 218  PP218    CRA

b6

PRODUCT

EP 0 545 654 B1

# *Fig. 4*

# *Fig. 7*

# Fig. 5

EP 0 545 654 B1

Fig. 6

# Fig. 8A

BPC(i)   ROUN-D-BIT

TYIN20

LCHO   BPRU5   BPRU4   BPRU3   BPRU2   BPRUI   BPRU0

# Fig. 8B

BPRU5   BPRU4   BPRU3   BPRU2   BPRUI   BPRU0

ROUN-D-BIT

TYOU20

LCHI   BPCV(i-1)   BPCV(k+6)   BPCV(k+4)   BPCV(k+2)   BPCV(k)
= BPCV(k+7)

BPCV(k+5)   BPCV(k+3)   BPCV(k+1)

# Fig. 8C

TYIN2I

〉

TYIN24

n bit

EP 0 545 654 B1

Fig. 9A
TYin2l

Fig. 9B
PPI5

Fig. 9C
BRA

Fig. 9D
TYou2l

Fig. 9E
TYou2la

Fig. 9F
TYou2lb

Fig. 10

Fig. 11

EP 0 545 654 B1

Fig. 12A  Multiplier

Fig. 12B  Multiplicand

Fig. 12C  SEL51 Output

Fig. 12D  PPG15 Output

Fig. 12E  SEL54 Output

Fig. 12F  BRA21 Output

Fig. 12G  CLK

Fig. 12H  Product

EP 0 545 654 B1

Fig. 13

F I g. 14A    Multiplier    X

F I g. 14B    Multiplicand    Y

F I g. 14C    PPG15a Output    PP1    PP2

F I g. 14D    SEL54a Output    INIT    INIT + PP1

F I g. 14E    PPG15b Output    PP3    PP4

F I g. 14F    SEL54b Output    INIT + PP1 + PP2    INIT + PP1 + PP2 + PP3

F I g. 14G    Product    X · Y

t00    t10    t20    t30    t40    t50